# EUROPEAN PATENT SPECIFICATION

(11) **EP 3 346 071 B1**
(45) Date of publication and mention of the grant of the patent: **10.03.2021**
(21) Application number: 18150403.6
(22) Date of filing: 05.01.2018
(51) Int. Cl.: E04D 13/03, F21S 19/00

(54) **A WINDOW ASSEMBLY**
FENSTERANORDNUNG
ENSEMBLE DE FENÊTRE

(30) Priority: 06.01.2017 DK 201770010
(43) Date of publication of application: 11.07.2018
(73) Proprietor: VKR Holding A/S, 2970 Hørsholm (DK)
(72) Inventor: LANGBO, Lars, 7500 Holstebro (DK); WIIG, Martin Schwartz, 2970 Hørsholm (DK)
(74) Representative: Patentgruppen A/S

(56) References cited:
- JP-A- H1 162 130
- JP-A- H10 299 191
- US-A1- 2005 201 075
- US-A1- 2013 307 420

## Description

### Field of the invention

The invention relates to a window assembly for being mounted in a roof or a celling of a building. The window assembly comprises a window including a window frame arranged to be fixed to the roof or the celling of the building, and wherein the window frame is arranged to suspend a window pane.

### Background of the invention

Skylights or roof windows are basically windows designed to be mounted in an inclined surface or a substantially horizontal surface of a building - typically a roof surface. I.e. such skylight comprises double or triple layer glazing as ordinary facade windows to provide insulation, soundproofing, strength and other US 2013/307420 discloses a skylight with a double glazing.

However, sometime such skylights or roof windows are arranged on flat roofs or roofs with only a slight slope, which means that water, snow, leafs or other will build-up on the almost horizontal outer surface of the window.

It is therefore known to provide a transparent window covering device over the standard skylight to form a protective dome or weather shield, wherein the covering device is formed with a convex, curving or dome-like shape to prevent the abovementioned build-up JP HI 1 62130 discloses a skylight with such a covering device.

Such skylights are typically arranged to provide a good lighting effect in daylight. But when it gets dark, lighting has to be provided from other light sources that may not be as optimally located. Or it is desired to supplement the daylight by means of additional artificial lighting to providing a more optimal lighting effect both during the daytime and at night.

Thus, from the German patent application DE 103 10 557 A1 it is therefore known to form a skylight as a dome and then provide a light source between the glass layers of a double glazed dome. But such a window is difficult and complex to manufacture.

It is therefore an object of the present invention to provide for a cost-efficient technique of providing lighting at a roof window assembly.

### The invention

The invention provides for a window assembly for being mounted in a roof or a ceiling of a building. The window assembly comprises a window including a window frame arranged to be fixed to the roof or the ceiling of the building. The window frame is arranged to suspend a window pane, wherein the window pane is at least double-glazed to form an insulated glazing of said window and comprises an outside surface arranged to face away from the building and an inside surface arranged to face the internal of the building. The window assembly further comprises an at least partly transparent window covering device arranged to cover the outside surface, wherein the window covering device comprises an outside surface arranged to face away from the window and an inside surface arranged to face towards the window. The window assembly comprises at least one at least partly transparent light emitting panel arranged between the outside surface of the window pane and the inside surface of the window covering device.

It is advantageous to place a light panel in the space between the window pane and the window covering device in that the light panel hereby will be well protected both from impacts from the outside and from the inside. Furthermore, this location enables easy fitting both in new window assemblies and when retrofitted in existing window assemblies thus enabling that the light emitting panel can be sold as a separate part to be retrofitted in existing window assemblies. And by making the light panel transparent, the inflow of natural daylight through the window assembly will only be reduced a little.

In this context the term "light emitting panel" should be understood as any kind of plate, sheet, board or other capable of emitting light from a majority of at least one side of the panel.

Also, in this context the term "transparent" should be understood as the physical property of allowing the transmission of light through a material. I.e. the term is not limited to the light emitting panel being able to transmit substantially all light at all wavelengths but the term does imply that light emitting panel overall is capable of transmitting more light than it blocks, absorbs or reflects.

In an aspect of the invention, the transparent light emitting panel comprises a transparent light guiding panel with light sources arranged along an edge of the light guiding panel.

Forming the light emitting panel as a light guiding panel with light sources arranged along an edge is advantageous in that the light sources thereby can be moved outside the area of the window pane. Furthermore, this design enables better cooling possibilities of the light sources.

In an aspect of the invention, the transparent light guiding panel is provided with diffuser elements arranged to direct a majority of light emitted from the light sources in a direction of the window.

Arranging diffuser element to direct a main part of the light inwards is advantageous in that this provides for a more optimal lighting effect inside the building.

In this context the term "diffuser element" should be understood as any kind of reflector, diffuser, mirror or other suited to be arranged in or on a transparent light guiding panel for changing the direction of light waves so that the light is emitted from the transparent light guiding panel.

In an aspect of the invention, the diffuser elements are arranged inside the transparent light guiding panel.

Forming the diffuser elements inside the light guiding panel is advantageous in that the elements hereby is better protected.

In an aspect of the invention, the light emitting panel is resting against the outside surface of the window pane.

Simply placing the light emitting panel directly on the outside surface of the window pane is a simple way of quickly installing a light panel. Furthermore, the panel will hereby be supported over a larger area or even its entire area thereby preventing deflection (in relation to the pane) and distortion in consequence thereof.

In an aspect of the invention, the light emitting panel is connected to the outside surface of the window pane.

If the distance between the light emitting panel and the window pane vary, it could lead to unwanted distortion when observing objects through the window assembly. It is therefore advantageous to attach the light emitting panel to the outside surface of the window pane to maintain a constant mutual distance - e.g. by means of adhesive, static electricity, plastic wrap effect, hydrophilic effect and/or other.

In an aspect of the invention, the light emitting panel is suspended above the outside surface of the window pane.

By suspending the light emitting panel independently above the outside surface of the window pane the light emitting panel will not strain the window pane.

In an aspect of the invention, the light emitting panel is connected to the window covering device.

The window covering device is typically wider than the window pane and by connecting the light emitting panel to the window covering device the light emitting panel can be formed wider - thereby reducing the risk of edges, light sources or other of the light emitting panel being seen from the inside.

In an aspect of the invention, at least a part of the window covering device is arranged to act as a heatsink for the light emitting panel.

The light source of the light emitting panel will at least to some degree produce heat when in use. Thus, arranging the window assembly so that the window covering device will act as a heatsink for the light emitting panel is advantageous in that the heat hereby easily and simply is guided away from the heat producing source thereby increasing the lifetime and efficiency of the light sources.

In an aspect of the invention, the light emitting panel is arranged to emit more light into the building than out of the building.

The light emitting panel is primarily incorporated in the window assembly to enhance the lighting effect inside the building on which the window assembly is mounted and it is therefore advantageous arrange the light emitting panel so that it emits more light into the building than out of the building.

In an aspect of the invention, the transparent light emitting panel is arranged to extend across 70%, preferably across 85% and most preferred across 95% of the area of the window pane.

If the light emitting panel is too little in relation to the window pane the illusion of the light emitting panel generating natural inflowing sunlight is reduced. It is therefore advantageous if the light emitting panel is arranged to extend across a certain percentage of the area of the window pane.

In an aspect of the invention, window assembly comprises a temperature sensor arranged to measure a temperature between the outside surface of the window pane and the inside surface of the window covering device and wherein the window assembly is arranged to only emit light from the light emitting panel if the temperature is below a predefined temperature level.

The enclosed space between the window and the window covering device can become very hot on sunny days and some light sources does not work well at high temperatures or can get damaged by operating at high temperatures. It is therefore advantageous to provide a temperature sensor arranged to measure the temperature inside the enclosed space so that the light sources of the light emitting panel are only turned on if the measured temperature is below a predefined level.

According to the invention, the window pane is at least double-glazed to form an insulated glazing of the window.

Modern windows have to be at least double-glazed to reduce heat loss through the pane and thereby create an insulating effect. The window covering device is often curving and therefore difficult and expensive to form double or triple-glazed. Furthermore, by forming the window pane as the insulating window part the thus more expensive window pane is better protected beneath the window covering device.

Insulated glazing (IG) - also known as Insulated Glass Unit (IGU) - is more commonly known as double-glazing (or double-pane, and increasingly triple glazing/pane or even more layers). An IGU consists of two or three transparent glass plates separated by a vacuum or gas filled space primarily to reduce heat transfer across the window pane.

In an aspect of the invention, the light emitting panel comprises organic light-emitting diodes (OLED).

OLEDs are very light intensive and capable of emitting light of many colors and OLEDs are therefore particularly suited for forming a light emitting panel of a window assembly.

An organic light-emitting diode (OLED) is a light-emitting diode (LED) in which the emissive electroluminescent layer is a film of organic compound that emits light in response to an electric current. This layer of organic semiconductor is situated between two electrodes which can be transparent and therefore particularly suited for the current purpose.

In an aspect of the invention, the window assembly comprises control means arranged to control the light emitting panel in response to a daylight level.

Controlling the light emitting panel in response to a daylight level is advantageous in that the light emitting panel hereby e.g. can be controlled to only operate when the daylight level is below a certain level (i.e. only at night or in cloudy weather), it could be controlled in response to the color of the inflowing light or other. I.e. in this context the term "daylight level" should be understood as the level of the inflowing daylight such as the level of intensity of the inflowing daylight or wavelength levels (i.e. the color) or other.

### Figures

The invention will be described in the following with reference to the figures in which
- fig. 1: illustrates cross section through a cutout section of a window assembly comprising a suspended light emitting panel, as seen from the front,
- fig. 2: illustrates a window covering device, as seen in perspective,
- fig. 3: illustrates a cross section through a cutout section of a window assembly comprising control means, as seen from the front,
- fig. 4: illustrates a cross section through a cutout section of a window assembly comprising two light emitting panels, as seen from the front,
- fig. 5: illustrates a cross section through a cutout section of a window assembly comprising an OLED light emitting panel, as seen from the front,
- fig. 6: illustrates a first embodiment of diffuser element in a light emitting panel, as seen from the front, and
- fig. 7: illustrates a second embodiment of diffuser element in a light emitting panel, as seen from the front.

### Detailed description

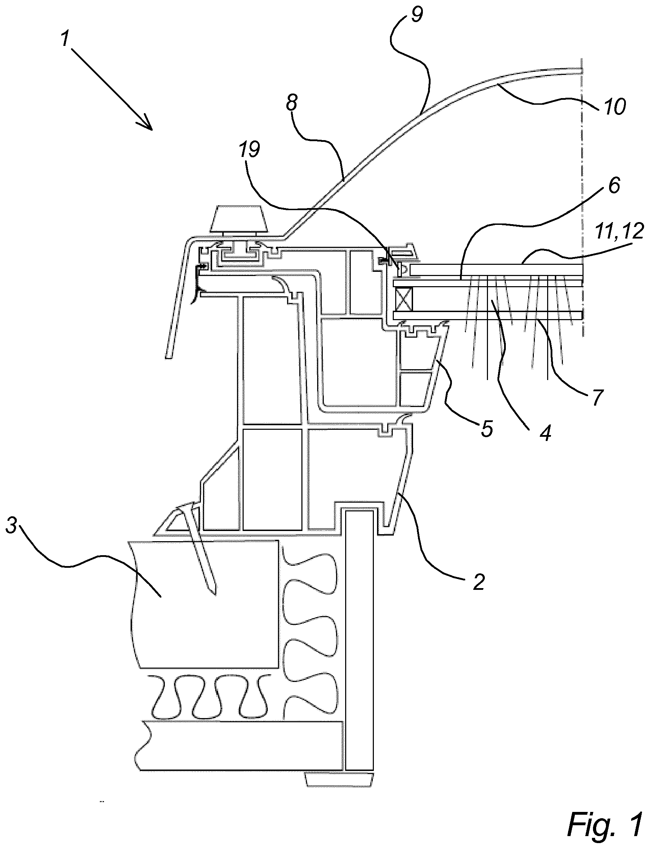

Fig. 1 illustrates cross section through a cutout section of a window assembly 1 comprising a suspended light emitting panel 11, as seen from the front.

In this embodiment the window assembly 1 comprises a window 5 having a window frame 2 that is connected to a flat roof surface of a building by means of screws. In another embodiment the window 5 could be connected differently to the specific building surface - such as by means of install frame, hardware, brackets, nails, bolts, adhesive or other.

The window frame 2 suspends a window pane 4 which in this case is double-glazed - i.e. the window pane comprises two layers of glass in-between which a gas filled enclosure is formed to reduce the thermal conductivity of the pane.

In this embodiment the window pane 4 comprises an outside surface 6 arranged to face away from the building and an inside surface 7 arranged to face into the building.

In this embodiment the window 5 is formed by means of several independent parts 2, 4 but in another embodiment one or more of these parts could be formed integrally.

In this embodiment the window assembly 1 further comprises a window covering device 8 in the form of a single layer dome formed in a transparent plastic material. However, in another embodiment the window covering device 8 could be formed differently i.e. as a flat surface arranged to slope, as a convex surface, as a double curved surface or other, and/or the window covering device 8 could comprise more layers, and/or the window covering device 8 could also or instead be formed in or comprise another transparent material such as glass, tempered glass, a composite material, a laminate of one or more transparent materials or other. The window covering device 8 may be removable to allow access to the interior of the window. This may be provided by gaskets and fasteners or locks enabling the covering device 8 to be releasably secured to the window 5.

In this embodiment the window covering device 8 comprises an outside surface 9 arranged to face away from the window 5 it covers and an inside surface 10 arranged to face towards the underlying window 5.

In this embodiment the window assembly 1 further comprises at a light emitting panel 11 arranged in the space between the outside surface 6 of the window pane 4 and the inside surface 10 of the window covering device 8, in that the light emitting panel 11 in this embodiment is resting against the periphery of the outside surface 6 of the window pane 4 so that the almost all the of the light emitting panel 11 is suspended above the outside surface 6 of the window pane 4.

In this embodiment the light emitting panel 11 comprises a transparent light guiding panel 12 with light sources 19 arranged along all four edges to emit light into the light guiding panel 12 wherefrom the light will be emitted out of the light emitting panel 11 and into the building.

The light guiding quality of the light guiding panel 12 enables that the light sources 19 may be placed at the edge of the light emitting panel 11 where it will not obstruct the view through the window assembly and/or it enables that the light source may be located more optimally in relation to power supply, heat emission, accessibility or other. In another embodiment the light guiding panel 12 could comprise further light guiding means - such as optical fibers, optical plates, optical tubes or other - to enable more freedom in relation to design and placement of the light sources 19.

In this embodiment the light emitting panel 11 is formed from transparent acrylic so that the light emitting panel 11 may emit light substantially over the entire surface area of the light emitting panel 11 and at the same time enable substantially full visibility through the window assembly from inside the building. However, in another embodiment the light emitting panel 11 could also or instead be formed from another transparent material such as glass, Polycarbonate, Butyrate, PETG (glycol modified polyethylene terephthalate) or other. In this embodiment the light emitting panel 11 is substantially parallel with the window pane 4.

In this embodiment the light source 19 is formed by a strip of light emitting diodes (LED) extending continuously around the entire light guiding panel 12 but in another embodiment the light source 19 would only be arranged along one, two or three edges and/or the light source 19 would not be formed continuously along one or more edges and/or the light sources 19 could also or instead comprise fluorescent lamps, lasers, organic light-emitting diode (OLED), image or light projectors or other.

In this embodiment the transparent light emitting panel 11 is so large that the light emitting part of the light emitting panel 11 entirely covers the part of the window pane 4 that can be seen by a viewer looking through the window from the inside and out but in another embodiment the non-transparent light source 19 could be visible along one or more edges; or other arrangements would entail that the light emitting panel 11 would not entirely cover the visible part of the window pane 4.

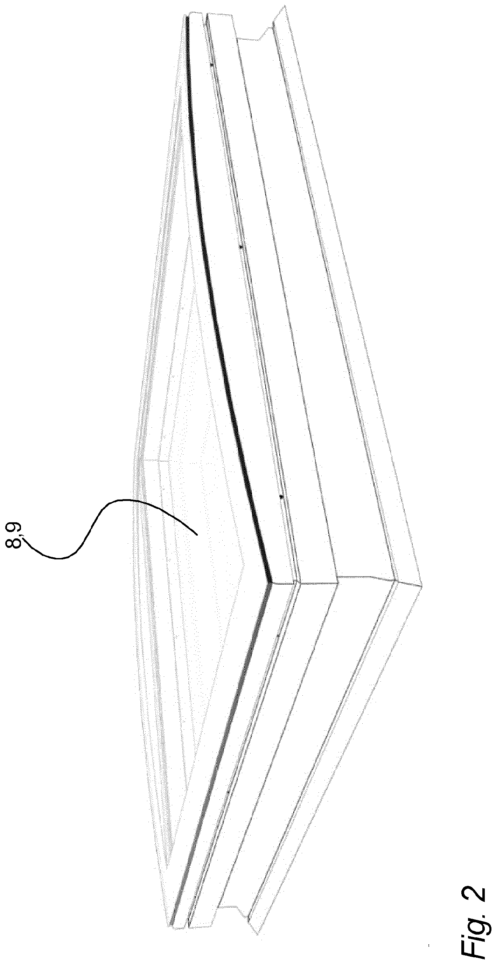

Fig. 2 illustrates a window covering device 8, as seen in perspective.

In the embodiment disclosed in fig. 1 the window covering device 8 is formed in a single piece in a moulding process but in this embodiment the window covering device 8 comprises a non-transparent aluminum side frame on to which a glass plate is fitted. In this embodiment the glass plate is slightly convex to enable that rain is drained away from the outside surface 9 of the glass plate and to prevent build-up of snow, leafs or other. However, it is obvious to the skilled person that the window covering device 8 can be formed in numerous other way from numerous other materials.

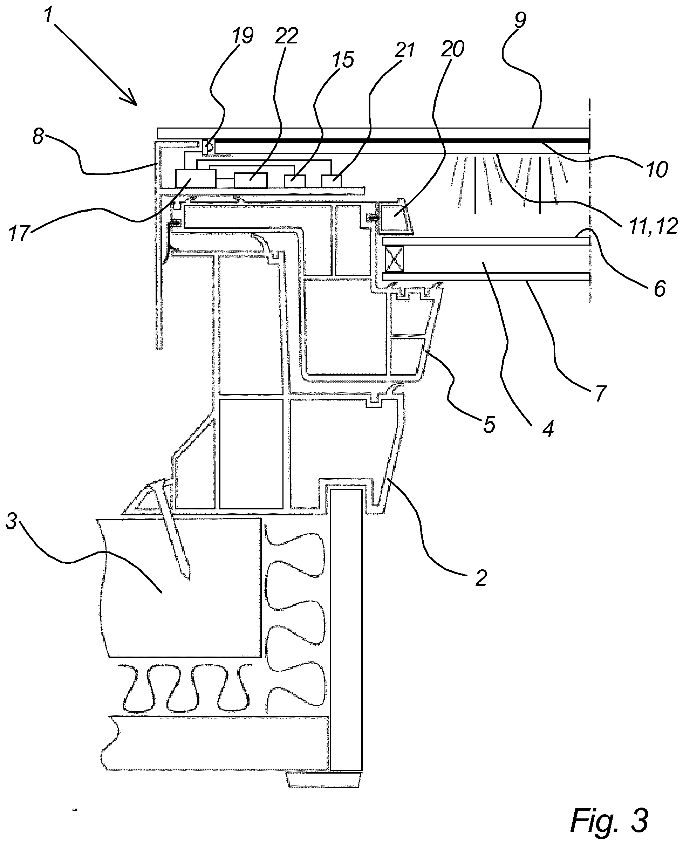

Fig. 3 illustrates a cross section through a cutout section of a window assembly 1 comprising control means 17, as seen from the front.

In this embodiment the window assembly 1 also comprises a temperature sensor 15 arranged to measure the temperature in the enclosure between the window covering device 8 and the window 5. The temperature sensor 15 is connected to control means 17 in the form of a small programmable logic controller (PLC) so that the control means will only turn on the light source 19 of the light emitting panel 11 if the temperature in below 40° Celsius to protect the light sources 19 from being damaged by the heat. The temperature can also be established by measuring a parameter indicative of the temperature, such as internal resistance of the light sources or power consumption thereof. In another embodiment the control means 17 could also or instead comprise a computer, a hard wired circuit or other.

In this embodiment the window assembly 1 also comprises a daylight level sensor 21 in the form of a daylight intensity sensor which is also connected to the control means 17 so that the control means 17 only turns on the light emitting panel 11 if the daylight intensity drops below a predefined level.

In another embodiment the window assembly 1 could comprise other sensors such as daylight color sensor enabling that the color of the light emitted from the light emitting panel 11 is adjusted in response to the color of the inflowing daylight or other types of sensors such as motions sensors, proximity sensors or other. And/or the control means could comprise a timer to enable that the operation of the light emitting panel 11 was controlled in response to the time of day or date. And/or the control means 17 could be arranged to control the light emitting panel 11 in response to a state of a window pane screening device (not shown) (such as any kind of curtain, drape, blind, shade, shutter or other) - i.e. the control means 17 could be arranged to automatically turn off the light emitting panel when a position sensor (not shown) is sensing that the screening device is at least partly screening the window pane.

In this embodiment the window assembly 1 also comprises a power source 22 in the form of a battery but in another embodiment the power source 22 could also or instead comprise a solar cell, a fuel cell or other and/or the light emitting panel 11 could be power by the utility grid and the window assembly 1 would then also comprise wiring to enable power supply from an external power source or means for wireless transfer of power.

In this embodiment the control means 17, the power source 22, the daylight level sensor 21 and the temperature sensor 15 are all arranged inside the enclosure between the window covering device 8 and the window 5 but in another embodiment one or more of these could at least partly be arranged anywhere else in or on the window assembly 1 or even outside the window assembly 1.

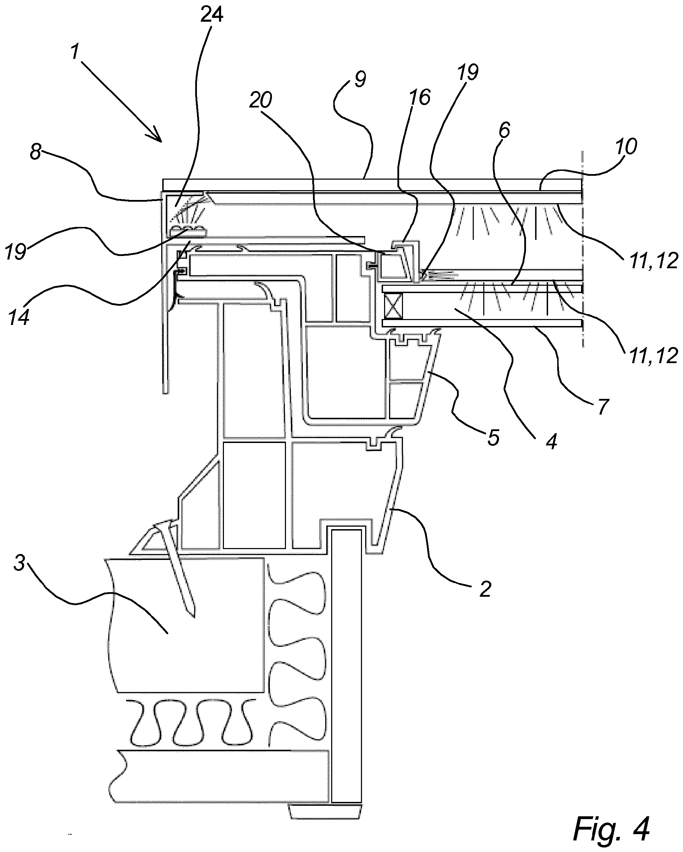

Fig. 4 illustrates a cross section through a cutout section of a window assembly 1 comprising two light emitting panels 11, as seen from the front.

In this embodiment the window assembly 1 comprises a light emitting panel 11 arranged at the window pane 4 and a light emitting panel 11 arranged at the window covering device 8 but in another embodiment the window assembly 1 could comprise another number of light emitting panels 11 - such as three, four, six or even more - or the window assembly 1 would only comprise one of the disclosed light emitting panels 11 and/or the panels 11 could be arranged differently - such as side-by-side, sloping in relation to the window pane 4 or other.

In this embodiment the window assembly 1 comprises a light emitting panel 11 in which the light guiding panel 12 is connected to the inside surface 10 of the window covering device 8 while the light source 19 is placed below the light guiding panel 12 and arranged to emit light perpendicular to the light guiding panel 12 into a reflector device 24 arranged to guide most of the emitted light into the edge of the light guiding panel 12 so that most of the light may be emitted from the light guiding panel 12. However, in another embodiment the light guiding panel 12, the light source 19 and/or a possible reflector device 24 could be arranged in numerous other ways, at numerous other mutual distances and angles and other.

In this embodiment the light source 19 of the upper light emitting panel 11 is placed on the metal frame of the window covering device 8 hereby using the window covering device 8 as a heatsink 14 for the light emitting panel 11. However, in another embodiment other parts of the window assembly 1 could be used for a heatsink 14 for the light emitting panel 11. In other embodiments a dedicated heat sink may be used to reduce the temperature of the light source 19.

In this embodiment the lower light emitting panel 11 is mounted in a suspension bracket 16 which in turn is suspended on the glass-holding strip 20 of the window 5. In other embodiments the glass-holding strip20 can also or instead be used for suspending automated blinds, curtains or other. Also, in another embodiment the light emitting panel 11 could be suspended in numerous other ways.

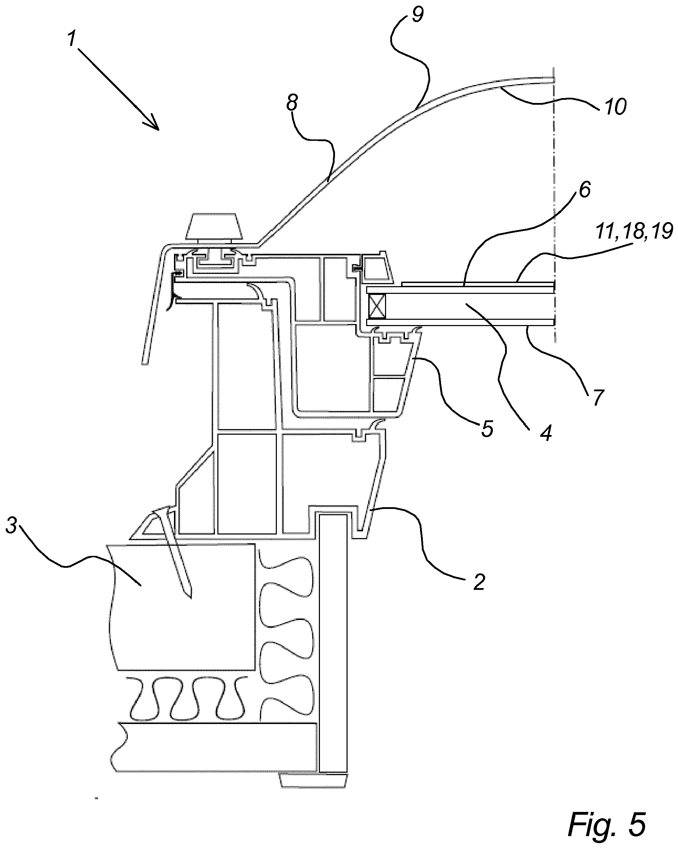

Fig. 5 illustrates a cross section through a cutout section of a window assembly 1 comprising an OLED 18 light emitting panel 11, as seen from the front.

In this embodiment the light emitting panel 11 is formed as a transparent film comprising organic light-emitting diodes (OLED) and in this embodiment the light emitting panel 11 is connected directly to the outside surface 6 of the window pane 4 by means of a transparent adhesive but in another embodiment the OLED film could be placed elsewhere in the window assembly 1 and/or the OLED 18 light emitting panel 11 could be connected by other connection means or the light emitting panel 11 could simply just rest against the window pane 4 so that it may easily be mounted, retrofitted and replaced.

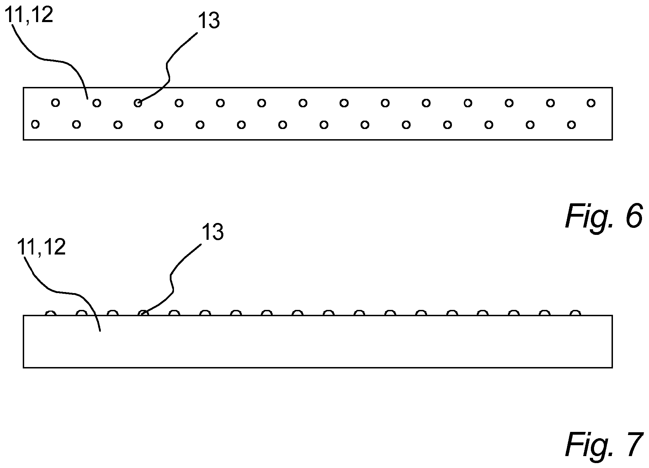

Fig. 6 illustrates a first embodiment of diffuser element 13 in a light emitting panel 11, as seen from the side.

In this embodiment the diffuser elements 13 are small air bubbles arranged inside the transparent light guiding panel 12 to scatter and diffuse the light emitted into the light emitting panel 11 so that at least some of the light is directed out of the light emitting panel 11. In another embodiment the diffuser elements 13 could also or instead comprise lenses, prisms, mirrors or other objects or designs arranged to diffuse particularly light traveling transversely so that at least some of it is emitted out of the light emitting panel 11.

Fig. 7 illustrates a second embodiment of diffuser element 13 in a light emitting panel 11, as seen from the side.

In this embodiment the diffuser elements 13 are arranged as surface irregularities or protrusions on the upper surface of the light emitting panel 11 to direct more light into the building than out of the building as described in the international patent application WO 2011/030284 A1. However, in another embodiment the light emitting panel 11 could comprise other types of diffuser elements 13 arranged to direct a majority of the emitted light (from the light source 19) in a direction of the window 5 - i.e. in another embodiment the light emitting panel 11 could also or instead comprise other types of diffuser elements 13 such lenses, prisms, mirrors or other objects or designs arranged so that the light emitting panel 11 will emit more light (generated by the light emitting panel 11) into the building than out of the building in which the window assembly 1 is mounted. Also grooves, perforations or suspended particles in the light emitting panel 11 can act as diffuser elements 13 arranged to direct a majority of the emitted light (from the light source 19) in a direction of the window 5.

It should be noticed that any orientation reference made throughout this application - such as top, bottom, upper, lower, up, down, side etc. - in made is relation to the window assembly 1 when mounted as intended in a building surface (typically a roof) - i.e. when the window assembly 1 is mounted with its normal and intended orientation and is in use as a window in a roof surface.

The invention has been exemplified above with reference to specific examples of window assemblies 1, window covering devices 8, light emitting panels 11 and other. However, it should be understood that the invention is not limited to the particular examples described above but may be designed and altered in a multitude of varieties within the scope of the invention as specified in the claims.

### List

- 1.: Window assembly
- 2.: Window frame
- 3.: Roof of a building
- 4.: Window pane
- 5.: Window
- 6.: Outside surface of window pane
- 7.: Inside surface of window pane
- 8.: Window covering device
- 9.: Outside surface of window covering device
- 10.: Inside surface of window covering device
- 11.: Light emitting panel
- 12.: Light guiding panel
- 13.: Diffuser elements
- 14.: Heatsink
- 15.: Temperature sensor
- 16.: Suspension bracket
- 17.: Control means
- 18.: Organic light-emitting diodes
- 19.: Light source
- 20.: Glass-holding strip
- 21.: Daylight level sensor
- 22.: Power source
- 24.: Reflector device

## Claims

1. A window assembly (1) for being mounted in a roof (3) or a ceiling of a building,
said window assembly (1) comprising
a window (5) including a window frame (2) arranged to be fixed to said roof (3) or said ceiling of said building, said window frame (2) being arranged to suspend a window pane (4), wherein said window pane (4) is at least double-glazed to form an insulated glazing of said window (5), wherein said window pane (4) comprises an outside surface (6) arranged to face away from said building and an inside surface (7) arranged to face the internal of said building,
**characterized in that**
said window assembly comprises an at least partly transparent window covering device (8) arranged to cover said outside surface (6), wherein said window covering device (8) comprises an outside surface (9) arranged to face away from said window (5) and an inside surface (10) arranged to face towards said window (5),
and at least one at least partly transparent light emitting panel (11) arranged between said outside surface (6) of said at least double-glazed window pane (4) and said inside surface (10) of said window covering device (8).

2. A window assembly (1) according to claim 1, wherein said transparent light emitting panel (11) comprises a transparent light guiding panel (12) with light sources (19) arranged along an edge of said light guiding panel (12).

3. A window assembly (1) according to claim 2, wherein said transparent light guiding panel (12) is provided with diffuser elements (13) arranged to direct a majority of light emitted from said light sources (19) in a direction of said window (5).

4. A window assembly (1) according to claim 3, wherein said diffuser elements (13) are arranged inside said transparent light guiding panel (12).

5. A window assembly (1) according to any of the preceding claims, wherein said light emitting panel (11) is resting against said outside surface (6) of said window pane (4).

6. A window assembly (1) according to any of the preceding claims, wherein said light emitting panel (11) is connected to said outside surface (6) of said window pane (4).

7. A window assembly (1) according to any of the preceding claims, wherein said light emitting panel (11) is suspended above said outside surface (6) of said window pane (4).

8. A window assembly (1) according to any of the preceding claims, wherein said light emitting panel (11) is connected to said window covering device (8).

9. A window assembly (1) according to claim 8, wherein at least a part of said window covering device (8) is arranged to act as a heatsink (14) for said light emitting panel (11).

10. A window assembly (1) according to any of the preceding claims, wherein said light emitting panel (11) is arranged to emit more light into said building than out of said building.

11. A window assembly (1) according to any of the preceding claims, wherein said transparent light emitting panel (11) is arranged to extend across 70%, preferably across 85% and most preferred across 95% of the area of said window pane (4).

12. A window assembly (1) according to any of the preceding claims, wherein window assembly (1) comprises a temperature sensor (15) arranged to measure a temperature between said outside surface (6) of said window pane (4) and said inside surface (10) of said window covering device (8) and wherein said window assembly (1) is arranged to only emit light from said light emitting panel (11) if said temperature is below a predefined temperature level.

13. A window assembly (1) according to any of the preceding claims, wherein said light emitting panel (11) comprises organic light-emitting diodes (18).

14. A window assembly (1) according to any of the preceding claims, wherein said window assembly (1) comprises control means (17) arranged to control said light emitting panel (11) in response to a daylight level.

## Patentansprüche

1. Fenstereinheit (1) zur Montage in einem Dach (3) oder einer Decke eines Gebäudes, wobei die Fenstereinheit (1) folgendes umfasst:
ein Fenster (5), das einen Fensterrahmen (2) umfasst, der für eine Anbringung an dem Dach (3) oder der Decke des Gebäudes angeordnet ist, wobei der Fensterrahmen (2) so angeordnet ist, dass er eine Fensterscheibe (4) hält, wobei die Fensterscheibe (4) mindestens doppelt verglast ist, um eine isolierende Verglasung des Fensters (5) zu bilden, wobei die Fensterscheibe (4) eine äußere Oberfläche (6) umfasst, die so angeordnet ist, dass sie von dem Gebäude weg zeigt, und eine innere Oberfläche (7), die so angeordnet ist, dass sie ins Innere des Gebäudes zeigt,
**dadurch gekennzeichnet, dass** die Fenstereinheit eine zumindest teilweise transparente Fensterabdeckungsvorrichtung (8) umfasst, die so angeordnet ist, dass sie die äußere Oberfläche (6) abdeckt, wobei die Fensterabdeckungsvorrichtung (8) eine äußere Oberfläche (9) umfasst, die so angeordnet ist, dass sie von dem Fenster (5) weg zeigt, und eine innere Oberfläche (10), die so angeordnet ist, dass sie zu dem Fenster (5) zeigt, und mit mindestens einem zumindest teilweise transparenten Licht emittierenden Panel (11), das zwischen der äußeren Oberfläche (6) der mindestens doppelt verglasten Fensterscheibe (4) und der inneren Oberfläche (10) der Fensterabdeckungsvorrichtung (8) angeordnet ist.

2. Fenstereinheit (1) nach Anspruch 1, wobei das zumindest teilweise transparente Licht emittierende Panel (11) ein transparentes Licht leitendes Panel (12) mit Lichtquellen (19) umfasst, die entlang einer Kante des Licht leitenden Panels (12) angeordnet sind.

3. Fenstereinheit (1) nach Anspruch 2, wobei das transparente Licht leitende Panel (12) mit Streuelementen (13) bereitgestellt ist, die so angeordnet sind, dass sie einen Großteil des von den Lichtquellen (19) emittierten Lichts in eine Richtung des Fensters (5) leiten.

4. Fenstereinheit (1) nach Anspruch 3, wobei die Streuelemente (13) in dem transparenten Licht leitenden Panel (12) angeordnet sind.

5. Fenstereinheit (1) nach einem der vorstehenden Ansprüche, wobei das Licht emittierende Panel (11) an der äußeren Oberfläche (6) der Fensterscheibe (4) anliegt.

6. Fenstereinheit (1) nach einem der vorstehenden Ansprüche, wobei das Licht emittierende Panel (11) mit der äußeren Oberfläche (6) der Fensterscheibe (4) verbunden ist.

7. Fenstereinheit (1) nach einem der vorstehenden Ansprüche, wobei das Licht emittierende Panel (11) über der äußeren Oberfläche (6) der Fensterscheibe (4) aufgehängt ist.

8. Fenstereinheit (1) nach einem der vorstehenden Ansprüche, wobei das Licht emittierende Panel (11) mit der Fensterabdeckungsvorrichtung (8) verbunden ist.

9. Fenstereinheit (1) nach Anspruch 8, wobei wenigstens ein Teil der Fensterabdeckungsvorrichtung (8) so angeordnet ist, dass er als ein Kühlkörper (14) für das Licht emittierende Panel (11) fungiert.

10. Fenstereinheit (1) nach einem der vorstehenden Ansprüche, wobei das Licht emittierende Panel (11) so angeordnet ist, dass es mehr Licht in das Gebäude als aus dem Gebäude emittiert.

11. Fenstereinheit (1) nach einem der vorstehenden Ansprüche, wobei das transparente Licht emittierende Panel (11) so angeordnet ist, dass es sich über 70%, vorzugsweise über 85% und am meisten bevorzugt über 95% der Fläche der Fensterscheibe (4) erstreckt.

12. Fenstereinheit (1) nach einem der vorstehenden Ansprüche, wobei die Fenstereinheit (1) einen Temperatursensor (15) umfasst, der so angeordnet ist, dass er eine Temperatur zwischen der äußeren Oberfläche (6) der Fensterscheibe (4) und der inneren Oberfläche (10) der Fensterabdeckungsvorrichtung (8) misst, und wobei die Fensteranordnung (1) so angeordnet ist, dass sie Licht von dem Licht emittierenden Panel (11) nur dann emittiert, wenn die Temperatur unter einem vorab festgelegten Temperaturwert liegt.

13. Fenstereinheit (1) nach einem der vorstehenden Ansprüche, wobei das Licht emittierende Panel (11) organische Leuchtdioden (18) umfasst.

14. Fenstereinheit (1) nach einem der vorstehenden Ansprüche, wobei die Fenstereinheit (1) Steuermittel (17) umfasst, die so angeordnet sind, dass sie das Licht emittierende Panel (11) als Reaktion auf die Tageslichtstärke steuert.

## Revendications

1. Ensemble de fenêtre (1) destiné à être monté dans un toit (3) ou un plafond d'un bâtiment, ledit ensemble de fenêtre (1) comprenant
une fenêtre (5) comprenant un cadre de fenêtre (2) conçu pour être fixé audit toit (3) ou audit plafond dudit bâtiment, ledit cadre de fenêtre (2) étant conçu pour suspendre une vitre de fenêtre (4), ladite vitre de fenêtre (4) étant au moins à double vitrage pour former un vitrage isolé de ladite fenêtre (5), ladite vitre de fenêtre (4) comprenant une surface extérieure (6) conçue pour être tournée à l'opposé dudit bâtiment et une surface intérieure (7) conçue pour être tournée vers l'intérieur dudit bâtiment,
**caractérisé en ce que**
ledit ensemble de fenêtre comprend
un dispositif de recouvrement de fenêtre (8) au moins partiellement transparent conçu pour couvrir ladite surface extérieure (6), ledit dispositif de recouvrement de fenêtre (8) comprenant une surface extérieure (9) conçue pour être tournée à l'opposé de ladite fenêtre (5) et une surface intérieure (10) conçue pour être tournée vers ladite fenêtre (5), et
au moins un panneau électroluminescent (11) au moins partiellement transparent, disposé entre ladite surface extérieure (6) de ladite vitre de fenêtre (4) au moins à double vitrage et ladite surface intérieure (10) dudit dispositif de recouvrement de fenêtre (8).

2. Ensemble de fenêtre (1) selon la revendication 1, ledit panneau électroluminescent transparent (11) comprenant un panneau de guidage de lumière transparent (12) avec des sources de lumière (19) disposées le long d'un bord dudit panneau de guidage de lumière (12).

3. Ensemble de fenêtre (1) selon la revendication 2, ledit panneau de guidage de lumière transparent (12) étant muni d'éléments diffuseurs (13) conçus pour diriger une majorité de la lumière émise par lesdites sources de lumière (19) dans une direction de ladite fenêtre (5).

4. Ensemble de fenêtre (1) selon la revendication 3, lesdits éléments diffuseurs (13) étant disposés à l'intérieur dudit panneau de guidage de lumière transparent (12).

5. Ensemble de fenêtre (1) selon l'une quelconque des revendications précédentes, ledit panneau électroluminescent (11) reposant contre ladite surface extérieure (6) de ladite vitre de fenêtre (4).

6. Ensemble de fenêtre (1) selon l'une quelconque des revendications précédentes, ledit panneau électroluminescent (11) étant relié à ladite surface extérieure (6) de ladite vitre de fenêtre (4).

7. Ensemble de fenêtre (1) selon l'une quelconque des revendications précédentes, ledit panneau électroluminescent (11) étant suspendu au-dessus de ladite surface extérieure (6) de ladite vitre de fenêtre (4).

8. Ensemble de fenêtre (1) selon l'une quelconque des revendications précédentes, ledit panneau électroluminescent (11) étant relié audit dispositif de recouvrement de fenêtre (8).

9. Ensemble de fenêtre (1) selon la revendication 8, au moins une partie dudit dispositif de recouvrement de fenêtre (8) étant conçue pour agir comme un dissipateur de chaleur (14) pour ledit panneau électroluminescent (11).

10. Ensemble de fenêtre (1) selon l'une quelconque des revendications précédentes, ledit panneau électroluminescent (11) étant conçu pour émettre plus de lumière dans ledit bâtiment que hors dudit bâtiment.

11. Ensemble de fenêtre (1) selon l'une quelconque des revendications précédentes, ledit panneau électroluminescent transparent (11) étant conçu pour s'étendre sur 70 %, de préférence sur 85 % et de préférence encore sur 95 % de la surface de ladite vitre de fenêtre (4).

12. Ensemble de fenêtre (1) selon l'une quelconque des revendications précédentes, l'ensemble de fenêtre (1) comprenant un capteur de température (15) conçu pour mesurer une température entre ladite surface extérieure (6) de ladite vitre de fenêtre (4) et ladite surface intérieure (10) dudit dispositif de recouvrement de fenêtre (8) et ledit ensemble de fenêtre (1) étant conçu pour n'émettre de la lumière depuis ledit panneau électroluminescent (11) que si ladite température est inférieure à un niveau de température prédéfini.

13. Ensemble de fenêtre (1) selon l'une quelconque des revendications précédentes, ledit panneau électroluminescent (11) comprenant des diodes électroluminescentes organiques (18).

14. Ensemble de fenêtre (1) selon l'une quelconque des revendications précédentes, ledit ensemble de fenêtre (1) comprenant un moyen de commande (17) conçu pour commander ledit panneau électroluminescent (11) en réponse à un niveau de lumière du jour.
